# EUROPEAN PATENT SPECIFICATION

(11) **EP 4 371 323 B1**
(45) Date of publication and mention of the grant of the patent: **28.01.2026**
(21) Application number: 22841313.4
(22) Date of filing: 11.07.2022
(51) Int. Cl.: H04W 4/06, H04W 12/75, H04W 12/76, H04L 12/18, H04W 52/02, H04W 76/40, H04W 76/11

(54) **METHOD AND APPARATUS FOR MULTICAST/BROADCAST SERVICE**
VERFAHREN UND VORRICHTUNG FÜR MULTICAST-/BROADCAST-DIENST
PROCÉDÉ ET APPAREIL POUR SERVICE DE MULTIDIFFUSION/DIFFUSION

(30) Priority: 12.07.2021 WO PCT/CN2021/105757
(43) Date of publication of application: 22.05.2024
(73) Proprietor: Telefonaktiebolaget LM Ericsson (publ), 164 83 Stockholm (SE)
(72) Inventor: LING, Jie, Shanghai 200335 (CN); LU, Yunjie, Shanghai 200335 (CN); GAN, Juying, Shanghai 200335 (CN)
(74) Representative: Ericsson
(86) International application number: PCT/CN2022/104906
(87) International publication number: WO 2023/284677

(56) References cited:
- CN-A- 108 632 915
- CN-A- 110 830 928
- CN-A- 112 954 613
- CN-B- 110 073 686
- US-A1- 2019 261 449
- US-A1- 2020 053 816
- US-A1- 2021 037 585
- US-A1- 2021 075 631
- US-A1- 2021 153 286
- ERICSSON: "Update [7.2.5.1] MBS Session Activation", vol. SA WG2, no. E-Meeting; 20210816 - 20210827, 10 August 2021 (2021-08-10), XP052055863, Retrieved from the Internet <URL:https://ftp.3gpp.org/tsg_sa/WG2_Arch/TSGS2_146E_Electronic_2021-08/Docs/S2-2105650.zip S2-2105650_23247[7.2.5.1] MBSessionActivation.doc> [retrieved on 20210810]
- "3rd Generation Partnership Project; Technical Specification Group Services and System Aspects; Architectural enhancements for 5G multicast-broadcast services; Stage 2 (Release 17)", no. V1.0.0, 7 June 2021 (2021-06-07), pages 1 - 81, XP052029444, Retrieved from the Internet <URL:https://ftp.3gpp.org/Specs/archive/23_series/23.247/23247-100.zip 23247-100.docx> [retrieved on 20210607]

## Description

### TECHNICAL FIELD

The non-limiting and exemplary embodiments of the present disclosure generally relate to the technical field of communications, and specifically to methods and apparatuses for multicast/broadcast service (MBS).

### BACKGROUND

This section introduces aspects that may facilitate a better understanding of the disclosure. Accordingly, the statements of this section are to be read in this light and are not to be understood as admissions about what is in the prior art or what is not in the prior art.

Multicast and Broadcast Service (MBS) is a point-to-multipoint service in which data is transmitted from a single source entity to multiple recipients. There are two types of MBS session: broadcast session and multicast session.

Third Generation Partnership Project (3GPP) TS 23.247 V1.0.0, describes architectural enhancements for 5G (fifth generation) multicast-broadcast services. As described in 3GPP TS 23.247 V1.0.0, the term "5GC Individual MBS traffic delivery" means that 5G CN (core network) receives a single copy of MBS data packets and delivers separate copies of those MBS data packets to individual UEs via per-UE PDU sessions, hence for each such UE one protocol data unit (PDU) session is required to be associated with a multicast session. The term "5GC shared MBS traffic delivery" means that 5G CN receives a single copy of MBS data packets and delivers a single copy of those MBS data packets to a RAN (radio access network) node. The term "Associated PDU Session" refers to a PDU Session associated to a multicast session that is used for 5GC (5G core network) individual MBS traffic delivery method and for signaling related to a user's participation in a multicast session such as join and leave requests. The term "Multicast MBS session" refers to an MBS session to deliver the multicast communication service. A multicast MBS session is characterized by the content to send, by the list of UEs that may receive the service and optionally by a multicast area where to distribute it. The term "individual paging" refers to a legacy paging mechanism that the AMF (Access and mobility Function) sends a paging request to NG-RAN (next generation radio access network) for an individual UE and uses 5G S-TMSI (S-Temporary Mobile Subscription Identifier) as paging identifier. The term group paging" refers to a new paging mechanism introduced in 5G MBS that the AMF sends a paging request to NG-RAN for all UEs that joined an MBS Session and uses TMGI (Temporary Mobile Group Identifier) as paging identifier.

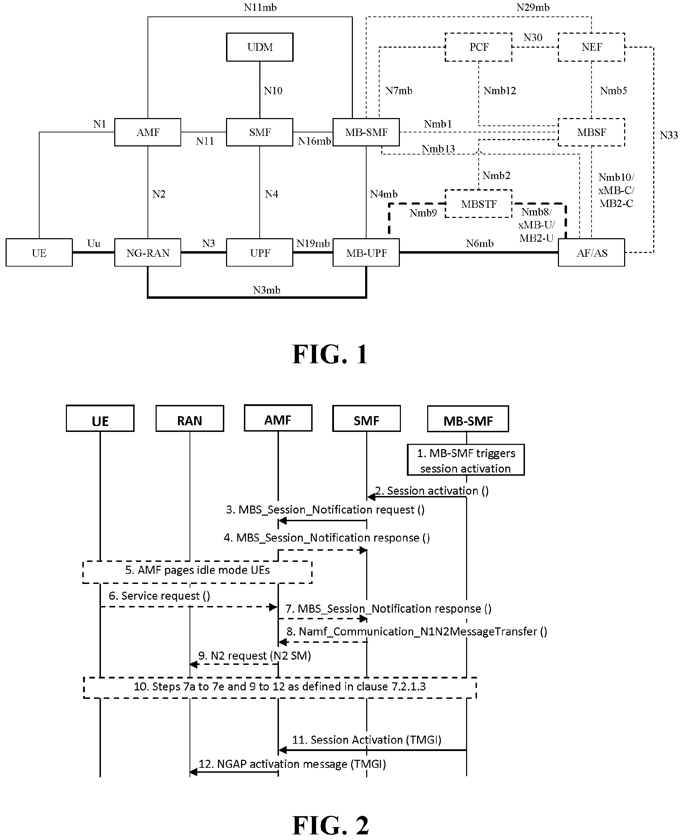

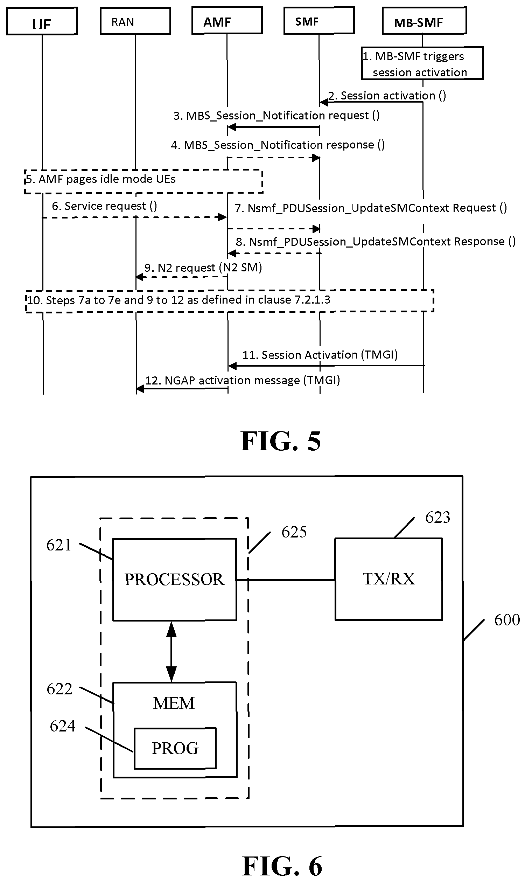

FIG.1 shows a 5G MBS system architecture in reference point representation, which is same as Figure 5.1-2 of 3GPP TS 23.247 V1.0.0. The 5G MBS system architecture may comprise functional entities such as PCF (Policy Control Function), MB-SMF (Multicast/Broadcast Session Management Function), SMF (Session Management Function), MB-UPF (Multicast/Broadcast User plane Function), UPF (User plane Function), AMF (Access and mobility Function), NG-RAN (next generation radio access network), UE (user equipment), AF (Application Function), NEF (Network Exposure Function), MBSF (Multicast/Broadcast Service Function), MBSTF (Multicast/Broadcast Service Transport Function), UDM (Unified Data Management), UDR (Unified Data Repository), NRF (Network Repository Function), etc. These functional entities have been described in clause 5.3.2 of 3GPP TS 23.247 V1.0.0.

For example, the MB-SMF may perform the following functions to support MBS:
- General for multicast and broadcast sessions:
   - Supporting MBS session management (including QoS control).
   - Configuring the MB-UPF for multicast and broadcast flows transport based on the policy rules for multicast and broadcast services from PCF or local policy.
   - Allocating and de-allocating TMGIs.
- Specific for broadcast sessions:
   - Interacting with RAN (via AMF) to control data transport using 5GC Shared MBS traffic delivery method.
- Specific for multicast sessions:
   - Interacting with SMF to modify PDU Session associated with MBS.
   - Interacting with RAN (via AMF and SMF) to establish data transmission resources between MB-UPF and RAN nodes for 5GC Shared MBS traffic delivery method.
   - Controlling multicast data transport using 5GC Individual MBS traffic delivery method.

The SMF may perform the following functions to support MBS:
- Discovering MB-SMF for multicast session.
- Authorizing multicast session join operation if needed.
- Interacting with MB-SMF to obtain and manage multicast session context.
- Interacting with RAN for shared data transmission resource establishment.

NOTE: SMF and MB-SMF may be co-located or deployed separately.

The AMF may perform the following functions to support MBS:
- Signalling with NG-RAN and MB-SMF for MBS Session management.
- Selection of NG-RANs for notification of multicast session activation toward UEs in CM (connection management)-IDLE state.
- Selection of NG-RANs for broadcast.
- Signalling with NG-RAN for NG-RAN MBS capability, or.
- May be configured with NG-RAN MBS capability.

The MBS System Architecture may contain the following reference points:
N3mb: Reference point between the (R)AN and the MB-UPF.
N4mb: Reference point between the MB-SMF and the MB-UPF.
N6mb: Reference point between the MB-UPF and the AF/AS.
N7mb: Reference point between the MB-SMF and the PCF.
N11mb: Reference point between the AMF and the MB-SMF.
N16mb: Reference point between the SMF and the MB-SMF.
N19mb: Reference Point between the UPF and the MB-UPF.
N29mb: Reference point between the MB-SMF and the NEF.
Nmb1: Reference point between the MB-SMF and the MBSF.
Nmb2: Reference point between the MBSF and the MBSTF.
Nmb5: Reference point between the MBSF and the NEF.
Nmb8: Reference point between the MBSTF and the AF.
Nmb9: Reference point between the MB-UPF and the MBSTF.
Nmb10: Reference point between the MBSF and the AF.
Nmb12: Reference point between the MBSF and the PCF.
Nmb13: Reference point between the MB-SMF and the AF.

The MBS System Architecture reuses the existing reference points of N1, N2, N10, N11, and N33 with enhancement to support 5G MBS.

Document ERICSSON: "Update [7.2.5.1] MBS Session Activation", 3GPP draft, S2-2105650, 10 August 2021, proposes to add PDU Session ID when SMF notifies the AMF of joined UEs.

Document "3rd Generation Partnership Project; Technical Specification Group Services and System Aspects; Architectural enhancements for 5G multicast-broadcast services; Stage 2 (Release 17)", 3GPP standard, 3GPP TS 23.247, no. V1.0.0, 7 June 2021, encompasses support for functions such as how to deliver multicast and broadcast communications including support within certain location areas, mobility, MBS session management and QoS.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

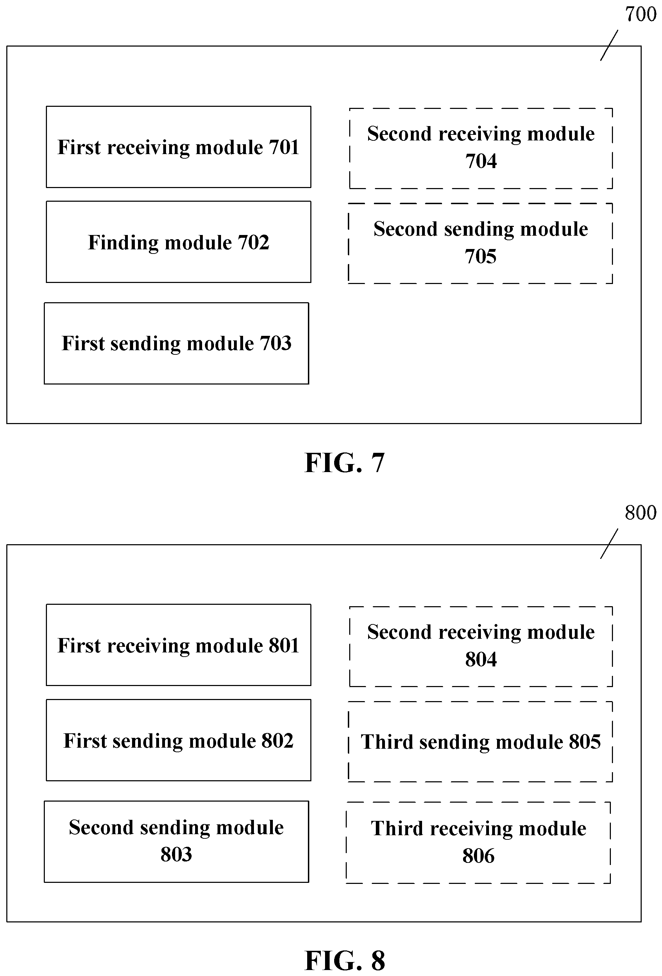

FIG.2 shows a flowchart of MBS session activation procedure, which is same as Figure 7.2.5.2-1 of 3GPP TS 23.247 V1.0.0.

The following can trigger the MBS session activation procedure:
- AF requests MB-SMF to activate the MBS session;
- MB-UPF receives the multicast data and notifies MB-SMF.

Step 1. The procedure may be triggered by the following events:
- When MB-UPF receives downlink data for a MBS session, MB-UPF sends MB-N4 Notification (N4 Session ID (Identifier)) to the MB-SMF for activating the MBS session.
- AF sends MBS Activation request (TMGI) to the MB-SMF directly or via NEF.

Step 2. MB-SMF sends Session activation notification (TMGI) to SMF(s).

Based on the received TMGI, SMF finds the list of UEs that joined the MBS session identified by the TMGI. If SMF determines the user plane of the associated PDU session(s) of the UE(s) with respect to TMGI are activated already, steps 3-9 of FIG.2 will be skipped for those UE.

Step 3. SMF sends MBS_Session_Notification Request to AMF, with including (UE list, TMGI).

After receiving the request, for each UE in the list, the AMF determines CM state of the UE: see steps 4 - 7 of FIG.2.

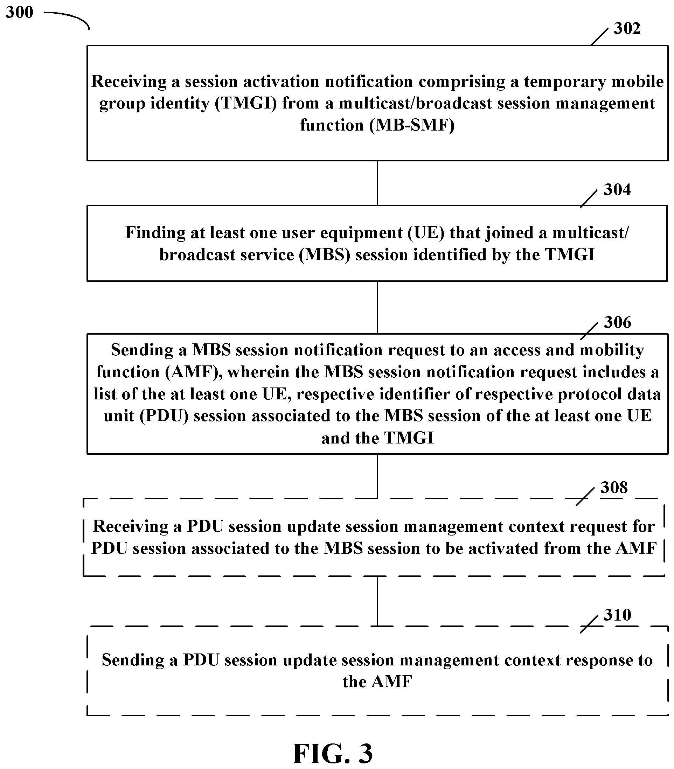

Step 4. [Optional] If the UE involved in the MBS Session is in CM-CONNECTED state, the AMF responds the list of the UE involved in the MBS Session and in CM-CONNECTED state, using MBS_Session_Notification Response (UE list). Step 5-6 of FIG.3 will not be executed for that UEs in the list.

Step 5. [Optional] If AMF determines that there are any UEs in CM-IDLE state and involved in the MBS Session, and AMF figures out the paging area considering all the UE(s), which need be paged. The AMF sends a paging request message to the NG-RAN node(s) belonging to this Paging Area with the TMGI as the identifier to be paged if the related NG-RAN node(s) support the MBS session.

Step 6. The UE in IDLE state sends Service Request message to AMF, see clause 4.2.3 of 3GPP TS 23.502 V17.0.0.

Step 7. After receiving the Service Request sent by the UE, the AMF responds to MB-SMF with MBS_Session_Notification Response (UE ID) message.

Step 8. After receiving MBS_Session_Notification Response message, SMF determines the related UE is in CM-Connected State and sends Namf_Communication_N1N2MessageTransfer (N2 SM message (MBS Session identifier, associated QoS profiles) to AMF for the UE which is identified in step 3 of FIG.2.

Step 9. AMF sends N2 request message (N2 SM message (MBS Session identifier, associated QoS profiles) to the RAN node.

Step 10. If the shared tunnel has not been established before, the shared tunnel is established at this step, as steps 7a to 7e defined in clause 7.2.1.3 of 3GPP TS 23.247 V1.0.0. In addition, NG-RAN responses to SMF, as steps 9 to 12 defined in clause 7.2.1.3 of 3GPP TS 23.247 V1.0.0. The NG-RAN configures UE with RRC (Radio Resource Control) messages if needed.

Step 11. MB-SMF sends Session Activation (TMGI) to the AMF.

NOTE 2: The messages in step 10 and 11 are MBS-specific messages and it is possible that the AMF(s) in step 10 of FIG.2 are not associated to any UEs involved in the MBS Session.

Step 12. AMF sends NGAP (Next Generation Application Protocol) activation message (TMGI) to the RAN nodes.

Among the steps of FIG.2, at step 3, the SMF may send an MBS_Session_Notification Request message to the AMF. At step 4 and step 7, the AMF may send two or more MBS_Session_Notification Response messages to SMF. The implications may be as following.

[Implication-1]: One MBS_Session_Notification Request message (e.g., at step 3) results in many MBS_Session_Notification Response messages (e.g., at step 4 and step 7).

[Implication-2]: When UE responds in Service Request, there is no additional indication that the Service Request is a response to normal paging or to group paging. Besides, NW(network)-initiated Service Request may be triggered for downlink data for other PDU Sessions (which may be from the same SMF).

[Implication-1] does not follow the Request-Response model (e.g., one request-one response). [Implication-2] means additional complexity in the AMF.

To overcome or mitigate at least one above mentioned problems or other problems, the embodiments of the present disclosure propose an improved MBS solution. According to the present disclosure, methods, an SMF, an AMF, a computer-readable storage medium and a computer program product according to the independent claims are provided. Developments are set forth in the dependent claims.

In an embodiment, to avoid the issue of One Request - Multiple Responses and to simplify the paging solution, it is proposed that when the SMF sends MBS_Session_Notification Request message to the AMF (to paging idle UEs), the SMF includes also the PDU Session ID of the associated PDU Session (i.e. PDU Session used to carry UE join signaling) so that Service Request from the UEs can be handled in the same way as for normal network initiated Service Request regardless of it being a response to normal paging or group paging.

In a first aspect of the disclosure, there is provided a method performed by at a session management function (SMF). The method comprises receiving a session activation notification comprising a temporary mobile group identity (TMGI) from a multicast/broadcast session management function (MB-SMF). The method further comprises finding at least one user equipment (UE) that joined a multicast/broadcast service (MBS) session identified by the TMGI. The method further comprises sending a MBS session notification request to an access and mobility function (AMF). The MBS session notification request includes a list of the at least one UE, respective identifier of respective protocol data unit (PDU) session associated to the MBS session of the at least one UE and the TMGI.

In an embodiment, respective user plane for respective PDU session associated to the MBS session of the at least one UE is not activated.

In an embodiment, the method further comprises receiving a PDU session update session management context request for PDU session associated to the MBS session to be activated from the AMF.

In an embodiment, the method further comprises sending a PDU session update session management context response to the AMF.

In an embodiment, the PDU session update session management context response comprises N2 session management information comprising a MBS session identifier and associated quality of service (QoS) profiles.

In a second aspect of the disclosure, there is provided a method performed by at an access and mobility function (AMF). The method comprises receiving a multicast/broadcast service (MBS) session notification request from a session management function (SMF). The MBS session notification request includes a list of at least one UE that joined a MBS session identified by a temporary mobile group identity (TMGI), respective identifier of respective protocol data unit (PDU) session associated to the MBS session of the at least one UE and the TMGI. The method further comprises sending a MBS session notification response comprising a list of the one or more UEs in the connection management connected state to the SMF when one or more UEs of at least one UE are in a connection management connected state. The method further comprises sending a paging request message to a radio access network node to paging the one or more UEs in the connection management idle state when one or more UEs of at least one UE are in a connection management idle state.

In an embodiment, the method further comprises receiving a service request from an idle UE of the one or more UEs in the connection management idle state.

In an embodiment, the method further comprises sending a PDU session update session management context request for the PDU session associated to the MBS session of the idle UE to be activated to the SMF based on the respective identifier of respective PDU session associated to the MBS session of the at least one UE.

In an embodiment, the method further comprises receiving a PDU session update session management context response for activating the user plane of the PDU session associated to the MBS session of the idle UE from the SMF.

In a third aspect of the disclosure, there is provided a session management function (SMF). The SMF comprises a processor and a memory coupled to the processor. Said memory contains instructions executable by said processor. Said SMF is operative to receive a session activation notification comprising a temporary mobile group identity (TMGI) from a multicast/broadcast session management function (MB-SMF). Said SMF is further operative to find at least one user equipment (UE) that joined a multicast/broadcast service (MBS) session identified by the TMGI. Said SMF is further operative to send a MBS session notification request to an access and mobility function (AMF). The MBS session notification request includes a list of the at least one UE, respective identifier of respective protocol data unit (PDU) session associated to the MBS session of the at least one UE and the TMGI.

In a fourth aspect of the disclosure, there is provided an access and mobility function (AMF). The AMF comprises a processor and a memory coupled to the processor. Said memory contains instructions executable by said processor. Said AMF is operative to receive a multicast/broadcast service (MBS) session notification request from a session management function (SMF). The MBS session notification request includes a list of at least one UE that joined a MBS session identified by a temporary mobile group identity (TMGI), respective identifier of respective protocol data unit (PDU) session associated to the MBS session of the at least one UE and the TMGI. Said AMF is further operative to send a MBS session notification response comprising a list of the one or more UEs in the connection management connected state to the SMF when one or more UEs of at least one UE are in a connection management connected state. Said AMF is further operative to send a paging request message to a radio access network node to paging the one or more UEs in the connection management idle state when one or more UEs of at least one UE are in a connection management idle state.

In a fifth aspect of the disclosure, there is provided a SMF. The SMF comprises a first receiving module configured to receive a session activation notification comprising a temporary mobile group identity (TMGI) from a multicast/broadcast session management function (MB-SMF). The SMF further comprises a finding module configured to find at least one user equipment (UE) that joined a multicast/broadcast service (MBS) session identified by the TMGI. The SMF further comprises a first sending module configured to send a MBS session notification request to an access and mobility function (AMF). The MBS session notification request includes a list of the at least one UE, respective identifier of respective protocol data unit (PDU) session associated to the MBS session of the at least one UE and the TMGI.

In an embodiment, the SMF further comprises a second receiving module configured to receive a PDU session update session management context request for PDU session associated to the MBS session to be activated from the AMF.

In an embodiment, the SMF further comprises a second sending module configured to send a PDU session update session management context response to the AMF.

In a sixth aspect of the disclosure, there is provided an AMF. The AMF comprises a first receiving module configured to receive a multicast/broadcast service (MBS) session notification request from a session management function (SMF), wherein the MBS session notification request includes a list of at least one UE that joined a MBS session identified by a temporary mobile group identity (TMGI), respective identifier of respective protocol data unit (PDU) session associated to the MBS session of the at least one UE and the TMGI. The AMF further comprises a first sending module configured to send a MBS session notification response comprising a list of the one or more UEs in the connection management connected state to the SMF when one or more UEs of at least one UE are in a connection management connected state. The AMF further comprises a second sending module configured to send a paging request message to a radio access network node to paging the one or more UEs in the connection management idle state when one or more UEs of at least one UE are in a connection management idle state.

In an embodiment, the AMF further comprises a second receiving module configured to receive a service request from an idle UE of the one or more UEs in the connection management idle state.

In an embodiment, the AMF further comprises a third sending module configured to send a PDU session update session management context request for the PDU session associated to the MBS session of the idle UE to be activated to the SMF based on the respective identifier of respective PDU session associated to the MBS session of the at least one UE.

In an embodiment, the AMF further comprises a third receiving module configured to receive a PDU session update session management context response for activating the user plane of the PDU session associated to the MBS session of the idle UE from the SMF.

In a seventh aspect of the disclosure, there is provided a computer-readable storage medium storing instructions which when executed by at least one processor, cause the at least one processor to perform any of the methods according to the first and second aspects of the disclosure.

In an eighth aspect of the disclosure, there is provided a computer program product, comprising instructions which, when executed on at least one processor, cause the at least one processor to carry out any of the methods according to the first and second aspects of the disclosure.

Many advantages may be achieved by applying the proposed solution according to embodiments of the present disclosure. For example, some embodiments of the present disclosure can avoid introducing a new mechanism of one request - multiple responses. Some embodiments of the present disclosure can greatly simplify the AMF and SMF handling of Service Requests from the UEs which are the responses to group paging. The embodiments herein are not limited to the features and advantages mentioned above. A person skilled in the art will recognize additional features and advantages upon reading the following detailed description.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG.1 shows a 5G MBS system architecture in reference point representation;
FIG.2 shows a flowchart of MBS session activation procedure;
FIG.3 shows a flowchart of a method according to an embodiment of the present disclosure;
FIG.4 shows a flowchart of a method according to another embodiment of the present disclosure;
FIG.5 shows a flowchart of MBS session activation procedure according to an embodiment of the present disclosure;
FIG.6 is a block diagram showing an apparatus suitable for use in practicing some embodiments of the disclosure;
FIG.7 is a block diagram showing a SMF according to an embodiment of the disclosure; and
FIG.8 is a block diagram showing an AMF according to an embodiment of the disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network" refers to a network following any suitable communication standards such as new radio (NR), long term evolution (LTE), LTE-Advanced, wideband code division multiple access (WCDMA), high-speed packet access (HSPA), Code Division Multiple Access (CDMA), Time Division Multiple Address (TDMA), Frequency Division Multiple Access (FDMA), Orthogonal Frequency-Division Multiple Access (OFDMA), Single carrier frequency division multiple access (SC-FDMA) and other wireless networks. A CDMA network may implement a radio technology such as Universal Terrestrial Radio Access (UTRA), etc. UTRA includes WCDMA and other variants of CDMA. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, Ad-hoc network, wireless sensor network, etc. In the following description, the terms "network" and "system" can be used interchangeably. Furthermore, the communications between two devices in the network may be performed according to any suitable communication protocols, including, but not limited to, the communication protocols as defined by a standard organization such as 3GPP. For example, the communication protocols may comprise the first generation (1G), 2G, 3G, 4G, 4.5G, 5G communication protocols, and/or any other protocols either currently known or to be developed in the future.

The term "network device" or "network node" or "network function (NF)" refers to any suitable function which can be implemented in a network entity (physical or virtual) of a communication network. For example, the network function can be implemented either as a network element on a dedicated hardware, as a software instance running on a dedicated hardware, or as a virtualized function instantiated on an appropriate platform, e.g. on a cloud infrastructure. For example, the 5G system (5GS) may comprise a plurality of NFs such as AMF (Access and mobility Function), SMF (Session Management Function), AUSF (Authentication Service Function), UDM (Unified Data Management), PCF (Policy Control Function), AF (Application Function), NEF (Network Exposure Function), UPF (User plane Function) and NRF (Network Repository Function), RAN (radio access network), SCP (service communication proxy), NWDAF (network data analytics function), NSSF (Network Slice Selection Function), NSSAAF (Network Slice-Specific Authentication and Authorization Function), etc.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

As used herein, the phrase "at least one of A and B" or "at least one of A or B" should be understood to mean "only A, only B, or both A and B." The phrase "A and/or B" should be understood to mean "only A, only B, or both A and B".

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that these terms as used in this document are used only for ease of description and differentiation among nodes, devices or networks etc. With the development of the technology, other terms with the similar/same meanings may also be used.

In the following description and claims, unless defined otherwise, all technical and scientific terms used herein have the same meaning as commonly understood by one of ordinary skills in the art to which this disclosure belongs.

Although the subject matter described herein may be implemented in any appropriate type of system using any suitable components, the embodiments disclosed herein are described in relation to a communication system complied with the exemplary system architecture illustrated in FIG.1. For simplicity, the system architecture of FIG.1 only depicts some exemplary elements. In practice, a communication system may further include any additional elements suitable to support communication between terminal devices or between a wireless device and another communication device, such as a landline telephone, a service provider, or any other network node or terminal device. The communication system may provide communication and various types of services to one or more terminal devices to facilitate the terminal devices' access to and/or use of the services provided by, or via, the communication system.

FIG.3 shows a flowchart of a method according to an embodiment of the present disclosure, which may be performed by an apparatus implemented in/as or communicatively coupled to a session management function (SMF). As such, the apparatus may provide means for accomplishing various parts of the method 300 as well as means for accomplishing other processes in conjunction with other components.

At block 302, the SMF may receive a session activation notification comprising a temporary mobile group identity (TMGI) from a multicast/broadcast session management function (MB-SMF).

The MB-SMF may trigger session activation due to various reasons. For example, when MB-UPF receives downlink data for a MBS session, MB-UPF sends MB-N4 Notification (N4 Session ID) to the MB-SMF for activating the MBS session. As another example, AF sends MBS Activation request (TMGI) to the MB-SMF directly or via NEF. Then MB-SMF may send session activation notification (TMGI) to the SMF.

At block 304, the SMF may find at least one user equipment (UE) that joined a multicast/broadcast service (MBS) session identified by the TMGI. For example, based on the received TMGI, SMF finds a list of at least one UE that joined the MBS session identified by the TMGI. If SMF determines the user plane of the associated PDU session(s) of one or more UEs of the at least one UE with respect to TMGI is activated already, block 306 may be skipped for those UE(s).

In an embodiment, respective user plane for respective PDU session associated to the MBS session of the at least one UE is not activated. For example, if SMF determines the user plane of the associated PDU session(s) of one or more UEs of the at least one UE with respect to TMGI is not activated, block 306 may be performed for those UE(s).

At block 306, the SMF may send a MBS session notification request to an access and mobility function (AMF). The MBS session notification request includes a list of the at least one UE, respective identifier of respective PDU session associated to the MBS session of the at least one UE and the TMGI.

After receiving the MBS session notification request, for each UE in the list, the AMF determines CM (connection management) state of the UE. If the UE involved in the MBS Session is in CM-CONNECTED state, the AMF responds the list of the UE(s) involved in the MBS Session and in CM-CONNECTED state, using MBS_Session_Notification Response (UE list). If AMF determines that there are any UE(s) in CM-IDLE state and involved in the MBS Session, and AMF figures out the paging area considering all the UE(s), which need be paged. The AMF sends a paging request message to the NG-RAN node(s) belonging to this Paging Area with the TMGI as the identifier to be paged if the related NG-RAN node(s) support the MBS session. The details of the paging are specified by the 3GPP RAN (radio access network) WGs (work group). The UE in IDLE state sends Service Request message to AMF, see clause 4.2.3 of 3GPP TS 23.502 V17.0.0.

At block 308, optionally, the SMF may receive a PDU session update session management context request for PDU session associated to the MBS session to be activated from the AMF. The PDU session update session management context request may comprise any suitable information for example as described in clause 5.2.8.2.6 of 3GPP TS 23.502 V17.0.0.

For example, after receiving the Service Request sent by the UE, the AMF may update the SMF based on the PDU Session ID received in block 306 in Nsmf_PDUSession_UpdateSMContext request message.

At block 310, the SMF may send a PDU session update session management context response to the AMF. The PDU session update session management context response may comprise any suitable information for example as described in clause 5.2.8.2.6 of 3GPP TS 23.502 V17.0.0. In an embodiment, the PDU session update session management context response comprises N2 session management information comprising a MBS session identifier and associated quality of service (QoS) profiles. The associated QoS profiles are used for the MBS Session identified by the MBS Session identifier. The N2 SM message may further comprise any other suitable information. In an embodiment, the PDU session update session management context response may further comprise the PDU session ID associated to the MBS session received in block 308.

For example, after receiving Nsmf_PDUSession_UpdateSMContext Request message, the SMF sends Nsmf_PDUSession_UpdateSMContext Response (N2 SM message (MBS Session identifier, associated QoS profiles) to AMF to activate the UP. For example, "Activate the UP" may be achieved by means of SMF sending the following to the AMF: SMF includes "PDU Session Resource Setup Transfer" in N2 SM information and SMF sets "N2 SM info type" to "PDU Session Resource Setup Request". In addition, the SMF may add the UE into the indicated MBS Session.

In an embodiment, the PDU session update session management context request of block 308 and the PDU session update session management context response of block 310 may be similar to the corresponding messages of step 4 and step 11 as described in clause 4.2.3.2 of 3GPP TS 23.502 V17.0.0. As described in clause 4.2.3.2 of 3GPP TS 23.502 V17.0.0, steps 5-10 may be performed before the SMF sends the PDU session update session management context response to the AMF.

Then AMF sends N2 request message (N2 SM message (MBS Session identifier, associated QoS profiles) to the RAN node. If the shared tunnel has not been established before, the shared tunnel is established as steps 7a to 7e defined in clause 7.2.1.3 of 3GPP TS 23.247 V1.0.0. In addition, NG-RAN responses to SMF, as steps 9 to 12 defined in clause 7.2.1.3 of 3GPP TS 23.247 V1.0.0. The NG-RAN configures UE with RRC messages if needed. MB-SMF sends Session Activation (TMGI) to the AMF. AMF sends NGAP activation message (TMGI) to the RAN nodes.

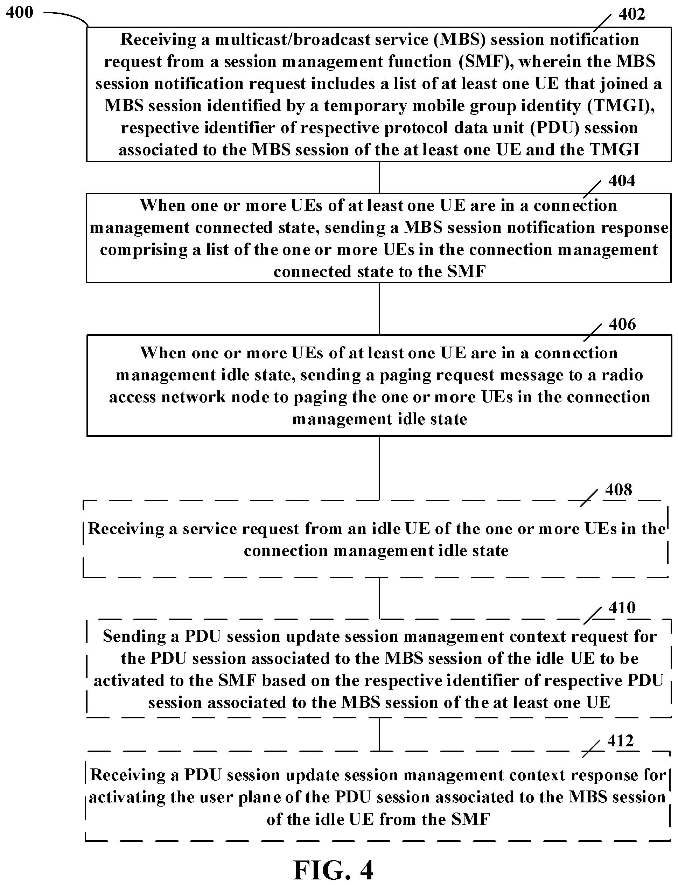

FIG.4 shows a flowchart of a method according to another embodiment of the present disclosure, which may be performed by an apparatus implemented in/as or communicatively coupled to an access and mobility function (AMF). As such, the apparatus may provide means for accomplishing various parts of the method 400 as well as means for accomplishing other processes in conjunction with other components. For some parts which have been described in the above embodiments, the description thereof is omitted here for brevity.

At block 402, the AMF may receive a multicast/broadcast service (MBS) session notification request from a session management function (SMF). The MBS session notification request includes a list of at least one UE that joined a MBS session identified by a temporary mobile group identity (TMGI), respective identifier of respective protocol data unit (PDU) session associated to the MBS session of the at least one UE and the TMGI.

At block 404, the AMF may send a MBS session notification response comprising a list of the one or more UEs in the connection management connected state to the SMF when one or more UEs of at least one UE are in a connection management connected state.

At block 406, the AMF may send a paging request message to a radio access network node to paging the one or more UEs in the connection management idle state when one or more UEs of at least one UE are in a connection management idle state.

At block 408, optionally, the AMF may receive a service request from an idle UE of the one or more UEs in the connection management idle state.

At block 410, optionally, the AMF may send a PDU session update session management context request for the PDU session associated to the MBS session of the idle UE to be activated to the SMF based on the respective identifier of respective PDU session associated to the MBS session of the at least one UE

At block 412, optionally, the AMF may receive a PDU session update session management context response for activating the user plane of the PDU session associated to the MBS session of the idle UE from the SMF.

In an embodiment, the PDU session update session management context response comprises N2 session management information comprising a MBS session identifier and associated quality of service (QoS) profiles.

In an embodiment, MBS Session activation procedure of clause 7.2.5.2 of 3GPP TS 23.247 V1.0.0 may be amended as following. MBS Session activation procedure is for multicast only. MBS Session activation procedure is triggered by MB-SMF, when it receives the notification from MB-UPF for the downlink MBS DL data, or when it receives the request directly from AF or via NEF. The MBS Session activation procedure is used for activating the resources for MBS data at NG-RAN node. The multicast session state transits from inactive to active after MBS Session activation procedure, see clause 4.3 of 3GPP TS 23.247 V1.0.0.

### 7.2.5.2 MBS session activation procedure

The following can trigger the MBS session activation procedure:
- AF requests MB-SMF to activate the MBS session;
- MB-UPF receives the multicast data and notifies MB-SMF.

Editor's Note: How to set up individual delivery resource (which was released at MBS Session Deactivation) is FFS.
Editor's Note: service operations of messages are FFS.
FIG.5 shows a flowchart of MBS session activation procedure according to an embodiment of the present disclosure.
   1. The procedure may be triggered by the following events:
      - When MB-UPF receives downlink data for a MBS session, MB-UPF sends MB-N4 Notification (N4 Session ID) to the MB-SMF for activating the MBS session.
      - AF sends MBS Activation request (TMGI) to the MB-SMF directly or via NEF.
   2. MB-SMF sends Session activation notification (TMGI) to SMF(s).
      Based on the received TMGI, SMF finds the list of UEs that joined the MBS session identified by the TMGI. If SMF determines the user plane of the associated PDU session(s) of the UE(s) with respect to TMGI are activated already, step 3-9 of FIG.5 will be skipped for those UE.
   3. SMF sends MBS_Session_Notification Request to AMF, with including ( List of UE and PDU Session ID of the associated PDU Session, TMGI).
      After receiving the request, for each UE in the list, the AMF determines CM state of the UE: see step 4 - 7 of FIG.5.
   4. [Optional] If the UE involved in the MBS Session is in CM-CONNECTED state, the AMF responds the list of the UE involved in the MBS Session and in CM-CONNECTED state, using MBS_Session_Notification Response (UE list). Step 5-6 of FIG.5 will not be executed for that UEs in the list.
   5. [Optional] If AMF determines that there are any UEs in CM-IDLE state and involved in the MBS Session, and AMF figures out the paging area considering all the UE(s), which need be paged. The AMF sends a paging request message to the NG-RAN node(s) belonging to this Paging Area with the TMGI as the identifier to be paged if the related NG-RAN node(s) support the MBS session.
      NOTE 1: The details of the paging are specified by the RAN WGs.
   6. The UE in IDLE state sends Service Request message to AMF, see clause 4.2.3 of 3GPP TS 23.502 V17.0.0.
   7. After receiving the Service Request sent by the UE, the AMF update the SMF based on the PDU Session ID received in step 3 of FIG.5 in Nsmf_PDUSession_UpdateSMContext request message.
   8. After receiving Nsmf_PDUSession_UpdateSMContext Request message, the SMF sends Nsmf_PDUSession_UpdateSMContext Response (N2 SM message (MBS Session identifier, associated QoS profiles) to AMF to active the UP including adding the UE into the indicated MBS Session.
   9. AMF sends N2 request message (N2 SM message (MBS Session identifier, associated QoS profiles) to the RAN node.
   10. If the shared tunnel has not been established before, the shared tunnel is established at this step, as steps 7a to 7e defined in clause 7.2.1.3 of 3GPP TS 23.247 V1.0.0. In addition, NG-RAN responses to SMF, as steps 9 to 12 defined in clause 7.2.1.3 of 3GPP TS 23.247 V1.0.0. The NG-RAN configures UE with RRC (Radio Resource Control) messages if needed.
   11. MB-SMF sends Session Activation (TMGI) to the AMF.
      NOTE 2: The messages in step 10 and 11 of FIG.5 is MBS-specific messages and it is possible that the AMF(s) in step 10 of FIG.5 are not associate to any UEs involved in the MBS Session.
   12.AMF sends NGAP activation message (TMGI) to the RAN nodes.
      Editor's Note: It is FFS that if messages 11, 12 of FIG.5 are sent only to the NG-RAN nodes for which the MB-N3 is setup at step 10 of FIG.5.
      Editor's Note: Whether it is the AMF or the MB-SMF that stores RAN ID for the interaction with RAN in step 11 needs to align with clause 7.2.1 of 3GPP TS 23.247 V1.0.0.

The update to clause 7.2.5.2 of TS 23.247 V1.0.0 may be as following. Step 3: SMF includes the PDU Session ID of the associated PDU Session in MBS_Session_Notification Request. Steps 7-8: AMF and SMF handle Service Request from UEs responding to group paging in the same way as for Service Request responding to individual paging (as specified in clause 4.2.3.3 of 3GPP TS23.502 V17.0.0).

Many advantages may be achieved by applying the proposed solution according to embodiments of the present disclosure. For example, some embodiments of the present disclosure can avoid introducing a new mechanism of one request - multiple responses. Some embodiments of the present disclosure can greatly simplify the AMF and SMF handling of Service Requests from the UEs which are the responses to group paging. The embodiments herein are not limited to the features and advantages mentioned above. A person skilled in the art will recognize additional features and advantages upon reading the following detailed description.

FIG.6 is a block diagram showing an apparatus suitable for practicing some embodiments of the disclosure. For example, the SMF or AMF described above may be implemented as or through the apparatus 600.

The apparatus 600 comprises at least one processor 621, such as a digital processor (DP), and at least one memory (MEM) 622 coupled to the processor 621. The apparatus 600 may further comprise a transmitter TX and receiver RX 623 coupled to the processor 621. The MEM 622 stores a program (PROG) 624. The PROG 624 may include instructions that, when executed on the associated processor 621, enable the apparatus 600 to operate in accordance with the embodiments of the present disclosure. A combination of the at least one processor 621 and the at least one MEM 622 may form processing means 625 adapted to implement various embodiments of the present disclosure.

Various embodiments of the present disclosure may be implemented by computer program executable by one or more of the processor 621, software, firmware, hardware or in a combination thereof.

The MEM 622 may be of any type suitable to the local technical environment and may be implemented using any suitable data storage technology, such as semiconductor based memory devices, magnetic memory devices and systems, optical memory devices and systems, fixed memories and removable memories, as non-limiting examples.

The processor 621 may be of any type suitable to the local technical environment, and may include one or more of general purpose computers, special purpose computers, microprocessors, digital signal processors (DSPs) and processors based on multicore processor architecture, as non-limiting examples.

In an embodiment where the apparatus is implemented as or at the SMF, the memory 622 contains instructions executable by the processor 621, whereby the SMF operates according to any of the methods related to the SMF as described above.

In an embodiment where the apparatus is implemented as or at the AMF, the memory 622 contains instructions executable by the processor 621, whereby the AMF operates according to any of the methods related to the AMF as described above.

FIG.7 is a block diagram showing a SMF according to an embodiment of the disclosure. As shown, the SMF 700 comprises a first receiving module 701 configured to receive a session activation notification comprising a temporary mobile group identity (TMGI) from a multicast/broadcast session management function (MB-SMF). The SMF 700 further comprises a finding module 702 configured to find at least one user equipment (UE) that joined a multicast/broadcast service (MBS) session identified by the TMGI. The SMF 700 further comprises a first sending module 703 configured to send a MBS session notification request to an access and mobility function (AMF). The MBS session notification request includes a list of the at least one UE, respective identifier of respective protocol data unit (PDU) session associated to the MBS session of the at least one UE and the TMGI.

In an embodiment, the SMF 700 further comprises a second receiving module 704 configured to receive a PDU session update session management context request for PDU session associated to the MBS session to be activated from the AMF.

In an embodiment, the SMF 700 further comprises a second sending module 705 configured to send a PDU session update session management context response to the AMF.

FIG.8 is a block diagram showing an AMF according to an embodiment of the disclosure. As shown, the AMF 800 comprises a first receiving module 801 configured to receive a multicast/broadcast service (MBS) session notification request from a session management function (SMF), wherein the MBS session notification request includes a list of at least one UE that joined a MBS session identified by a temporary mobile group identity (TMGI), respective identifier of respective protocol data unit (PDU) session associated to the MBS session of the at least one UE and the TMGI. The AMF 800 further comprises a first sending module 802 configured to send a MBS session notification response comprising a list of the one or more UEs in the connection management connected state to the SMF when one or more UEs of at least one UE are in a connection management connected state. The AMF 800 further comprises a second sending module 803 configured to send a paging request message to a radio access network node to paging the one or more UEs in the connection management idle state when one or more UEs of at least one UE are in a connection management idle state.

In an embodiment, the AMF 800 further comprises a second receiving module 804 configured to receive a service request from an idle UE of the one or more UEs in the connection management idle state.

In an embodiment, the AMF 800 further comprises a third sending module 805 configured to send a PDU session update session management context request for the PDU session associated to the MBS session of the idle UE to be activated to the SMF based on the respective identifier of respective PDU session associated to the MBS session of the at least one UE.

In an embodiment, the AMF 800 further comprises a third receiving module 806 configured to receive a PDU session update session management context response for activating the user plane of the PDU session associated to the MBS session of the idle UE from the SMF.

The term unit or module may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

With function units, the SMF or the AMF may not need a fixed processor or memory, any computing resource and storage resource may be arranged from the SMF or the AMF in the communication system. The introduction of virtualization technology and network computing technology may improve the usage efficiency of the network resources and the flexibility of the network.

According to an aspect of the disclosure it is provided a computer program product being tangibly stored on a computer readable storage medium and including instructions which, when executed on at least one processor, cause the at least one processor to carry out any of the methods as described above.

According to an aspect of the disclosure it is provided a computer-readable storage medium storing instructions which when executed by at least one processor, cause the at least one processor to carry out any of the methods as described above.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to as those skilled in the art readily understand. Such modifications and variations are considered to be within the scope of the disclosure and the appended claims. The protection scope of the disclosure is defined by the accompanying claims.

## Claims

1. A method (300) performed by at a session management function, SMF, comprising:
receiving (302) a session activation notification comprising a temporary mobile group identity, TMGI, from a multicast/broadcast session management function, MB-SMF;
finding (304) at least one user equipment, UE, that joined a multicast/broadcast service, MBS, session identified by the TMGI;
sending (306) an MBS session notification request to an access and mobility function, AMF, wherein the MBS session notification request includes a list of the at least one UE, respective identifier of respective protocol data unit, PDU, session associated to the MBS session of the at least one UE and the TMGI;
receiving (308) a PDU session update session management context request for PDU session associated to the MBS session to be activated from the AMF; and
sending (310) a PDU session update session management context response to the AMF.

2. The method according to claim 1, wherein respective user plane for respective PDU session associated to the MBS session of the at least one UE is not activated.

3. The method according to claim 1 or 2, wherein the PDU session update session management context response comprises N2 session management information comprising an MBS session identifier and associated quality of service, QoS, profiles.

4. A method (400) performed by at an access and mobility function, AMF, comprising:
receiving (402) a multicast/broadcast service, MBS, session notification request from a session management function, SMF, wherein the MBS session notification request includes a list of at least one UE that joined an MBS session identified by a temporary mobile group identity, TMGI, respective identifier of respective protocol data unit, PDU, session associated to the MBS session of the at least one UE and the TMGI;
when one or more UEs of at least one UE are in a connection management connected state, sending (404) an MBS session notification response comprising a list of the one or more UEs in the connection management connected state to the SMF;
when one or more UEs of at least one UE are in a connection management idle state, sending (406) a paging request message to a radio access network node to paging the one or more UEs in the connection management idle state;
receiving (408) a service request from an idle UE of the one or more UEs in the connection management idle state;
sending (410) a PDU session update session management context request for the PDU session associated to the MBS session of the idle UE to be activated to the SMF based on the respective identifier of respective PDU session associated to the MBS session of the at least one UE; and
receiving (412) a PDU session update session management context response for activating the user plane of the PDU session associated to the MBS session of the idle UE from the SMF.

5. The method according to claim 4, wherein the PDU session update session management context response comprises N2 session management information comprising an MBS session identifier and associated quality of service, QoS, profiles.

6. A session management function, SMF (600), comprising:
a processor (621); and
a memory (622) coupled to the processor (621), said memory (622) containing instructions executable by said processor (621), whereby said SMF (600) is operative to:
receive a session activation notification comprising a temporary mobile group identity, TMGI, from a multicast/broadcast session management function, MB-SMF;
find at least one user equipment, UE, that joined a multicast/broadcast service, MBS, session identified by the TMGI;
send an MBS session notification request to an access and mobility function, AMF, wherein the MBS session notification request includes a list of the at least one UE, respective identifier of respective protocol data unit, PDU, session associated to the MBS session of the at least one UE and the TMGI;
receive a PDU session update session management context request for PDU session associated to the MBS session to be activated from the AMF; and
send a PDU session update session management context response to the AMF.

7. The SMF according to claim 6, wherein the SMF is further operative to perform the method of claim 2 or 3.

8. An access and mobility function, AMF (600), comprising:
a processor (621); and
a memory (622) coupled to the processor (621), said memory (622) containing instructions executable by said processor (621), whereby said AMF (600) is operative to:
receive a multicast/broadcast service, MBS, session notification request from a session management function, SMF, wherein the MBS session notification request includes a list of at least one UE that joined an MBS session identified by a temporary mobile group identity, TMGI, respective identifier of respective protocol data unit, PDU, session associated to the MBS session of the at least one UE and the TMGI;
when one or more UEs of at least one UE are in a connection management connected state, send an MBS session notification response comprising a list of the one or more UEs in the connection management connected state to the SMF;
when one or more UEs of at least one UE are in a connection management idle state, send a paging request message to a radio access network node to paging the one or more UEs in the connection management idle state;
receive (408) a service request from an idle UE of the one or more UEs in the connection management idle state;
send (410) a PDU session update session management context request for the PDU session associated to the MBS session of the idle UE to be activated to the SMF based on the respective identifier of respective PDU session associated to the MBS session of the at least one UE; and
receive (412) a PDU session update session management context response for activating the user plane of the PDU session associated to the MBS session of the idle UE from the SMF.

9. The AMF according to claim 8, wherein the AMF is further operative to perform the method of claim 5.

10. A computer-readable storage medium storing instructions which when executed by at least one processor, cause the at least one processor to perform the method according to any one of claims 1 to 5.

11. A computer program product comprising instructions which when executed by at least one processor, cause the at least one processor to perform the method according to any of claims 1 to 5.

## Patentansprüche

1. Verfahren (300), das von an einer Sitzungsverwaltungsfunktion, SMF, durchgeführt wird, Folgendes umfassend:
Empfangen (302) einer Sitzungsaktivierungsbenachrichtigung, die eine temporäre mobile Gruppenidentität, TMGI, umfasst, von einer Multicast-/Broadcast-Sitzungsverwaltungsfunktion, MB-SMF;
Finden (304) von mindestens einer Benutzereinrichtung, UE, die einer Multicast-/Broadcast-Dienst-Sitzung, MBS-Sitzung, beigetreten ist, die durch die TMGI identifiziert ist;
Senden (306) einer MBS-Sitzungsbenachrichtungsanforderung an eine Zugangs- und Mobilitätsfunktion, AMF, wobei die MBS-Sitzungsbenachrichtigungsanforderung eine Liste der mindestens einen UE, eine jeweilige Kennung der jeweiligen Protokolldateneinheitssitzung, PDU-Sitzung, die mit der MBS-Sitzung der mindestens einen UE verknüpft ist, und die TMGI beinhaltet;
Empfangen (308) einer Sitzungsverwaltungs-Kontextanforderung zur Aktualisierung der PDU-Sitzung für die PDU-Sitzung, die mit der MBS-Sitzung verknüpft ist, die zu aktivieren ist, von der AMF; und
Senden (310) einer Sitzungsverwaltungs-Kontextantwort zur Aktualisierung der PDU-Sitzung an die AMF.

2. Verfahren nach Anspruch 1, wobei eine jeweilige Benutzerebene für die jeweilige PDU-Sitzung, die mit der MBS-Sitzung der mindestens einen UE verknüpft ist, nicht aktiviert ist.

3. Verfahren nach Anspruch 1 oder 2, wobei die Sitzungsverwaltungs-Kontextantwort zur Aktualisierung der PDU-Sitzung N2-Sitzungsverwaltungsinformationen umfasst, die eine MBS-Sitzungskennung und verknüpfte Dienstqualitätsprofile, QoS-Profile, umfassen.

4. Verfahren (400) das von an einer Zugriffs- und Mobilitätsfunktion, AMF, durchgeführt wird, umfassend:
Empfangen (402) einer Sitzungsbenachrichtungsanforderung für einen Multicast-/Broadcast-Dienst, MBS, von einer Sitzungsverwaltungsfunktion, SMF, wobei die MBS-Sitzungsbenachrichtigungsanforderung eine Liste mindestens einer UE, die einer MBS-Sitzung beigetreten ist, die durch eine temporäre mobile Gruppenidentität, TMGI, identifiziert ist, eine jeweilige Kennung einer jeweiligen Protokolldateneinheitssitzung, PDU-Sitzung, die mit der MBS-Sitzung der mindestens einen UE verknüpft ist, und die TMGI beinhaltet;
wenn eine oder mehrere UEs mindestens einer UE in einem verbundenen Zustand der Verbindungsverwaltung sind, Senden (404) einer MBS-Sitzungsbenachrichtigungsantwort, die eine Liste der einen oder der mehreren UEs in dem verbundenen Zustand der Verbindungsverwaltung umfasst, an die SMF;
wenn eine oder mehrere UEs mindestens einer UE in einem Ruhezustand der Verbindungsverwaltung sind, Senden (406) einer Paging-Anforderungsnachricht an einen Funkzugangsnetzknoten zum Pagen der einen oder der mehreren UEs in dem Ruhezustand der Verbindungsverwaltung;
Empfangen (408) einer Service-Anforderung von einer Ruhe-UE der einen oder der mehreren UEs in dem Ruhezustand der Verbindungsverwaltung;
Senden (410) einer Sitzungsverwaltungs-Kontextanforderung zur Aktualisierung der PDU-Sitzung für die PDU-Sitzung, die mit der MBS-Sitzung der Ruhe-UE, die zu aktivieren ist, verknüpft ist, an die SMF basierend auf der jeweiligen Kennung der jeweiligen PDU-Sitzung, die mit der MBS-Sitzung der mindestens einen UE verknüpft ist; und
Empfangen (412) einer Sitzungsverwaltungs-Kontextantwort zur Aktualisierung der PDU-Sitzung zum Aktivieren der Benutzerebene der PDU-Sitzung, die mit der MBS-Sitzung der Ruhe-UE verknüpft ist, von der SMF.

5. Verfahren nach Anspruch 4, wobei die Sitzungsverwaltungs-Kontextantwort zur Aktualisierung der PDU-Sitzung N2-Sitzungsverwaltungsinformationen umfasst, die eine MBS-Sitzungskennung und verknüpfte Dienstqualitätsprofile, QoS-Profile, umfassen.

6. Sitzungsverwaltungsfunktion, SMF (600), umfassend:
einen Prozessor (621); und
einen Speicher (622), der an den Prozessor (621) gekoppelt ist, wobei der Speicher (622) Anweisungen enthält, die durch den Prozessor (621) ausführbar sind, wobei die SMF (600) zu Folgendem betreibbar ist:
Empfangen einer Sitzungsaktivierungsbenachrichtigung, die eine temporäre mobile Gruppenidentität, TMGI, umfasst, von einer Multicast-/Broadcast-Sitzungsverwaltungsfunktion, MB-SMF;
Finden von mindestens einer Benutzereinrichtung, UE, die einer Multicast-/Broadcast-Dienst-Sitzung, MBS-Sitzung, beigetreten ist, die durch die TMGI identifiziert ist;
Senden einer MBS-Sitzungsbenachrichtungsanforderung an eine Zugangs- und Mobilitätsfunktion, AMF, wobei die MBS-Sitzungsbenachrichtigungsanforderung eine Liste der mindestens einen UE, eine jeweilige Kennung der jeweiligen Protokolldateneinheitssitzung, PDU-Sitzung, die mit der MBS-Sitzung der mindestens einen UE verknüpft ist, und die TMGI beinhaltet;
Empfangen einer Sitzungsverwaltungs-Kontextanforderung zur Aktualisierung der PDU-Sitzung für die PDU-Sitzung, die mit der MBS-Sitzung verknüpft ist, die zu aktivieren ist, von der AMF; und
Senden einer Sitzungsverwaltungs-Kontextantwort zur Aktualisierung der PDU-Sitzung an die AMF.

7. SMF nach Anspruch 6, wobei die SMF ferner dazu betreibbar ist, das Verfahren nach Anspruch 2 oder 3 durchzuführen.

8. Zugangs- und Mobilitätsfunktion, AMF (600), umfassend:
einen Prozessor (621); und
einen Speicher (622), der an den Prozessor (621) gekoppelt ist, wobei der Speicher (622) Anweisungen enthält, die durch den Prozessor (621) ausführbar sind, wobei die AMF (600) zu Folgendem betreibbar ist:
Empfangen einer Sitzungsbenachrichtungsanforderung für einen Multicast-/Broadcast-Dienst, MBS, von einer Sitzungsverwaltungsfunktion, SMF, wobei die MBS-Sitzungsbenachrichtigungsanforderung eine Liste mindestens einer UE, die einer MBS-Sitzung beigetreten ist, die durch eine temporäre mobile Gruppenidentität, TMGI, identifiziert ist, eine jeweilige Kennung einer jeweiligen Protokolldateneinheitssitzung, PDU-Sitzung, die mit der MBS-Sitzung der mindestens einen UE verknüpft ist, und die TMGI beinhaltet;
wenn eine oder mehrere UEs mindestens einer UE in einem verbundenen Zustand der Verbindungsverwaltung sind, Senden einer MBS-Sitzungsbenachrichtigungsantwort, die eine Liste der einen oder der mehreren UEs in dem verbundenen Zustand der Verbindungsverwaltung umfasst, an die SMF;
wenn eine oder mehrere UEs mindestens einer UE in einem Ruhezustand der Verbindungsverwaltung sind, Senden einer Paging-Anforderungsnachricht an einen Funkzugangsnetzknoten zum Pagen der einen oder der mehreren UEs in dem Ruhezustand der Verbindungsverwaltung;
Empfangen (408) einer Service-Anforderung von einer Ruhe-UE der einen oder der mehreren UEs in dem Ruhezustand der Verbindungsverwaltung;
Senden (410) einer Sitzungsverwaltungs-Kontextanforderung zur Aktualisierung der PDU-Sitzung für die PDU-Sitzung, die mit der MBS-Sitzung der Ruhe-UE, die zu aktivieren ist, verknüpft ist, an die SMF basierend auf der jeweiligen Kennung der jeweiligen PDU-Sitzung, die mit der MBS-Sitzung der mindestens einen UE verknüpft ist; und
Empfangen (412) einer Sitzungsverwaltungs-Kontextantwort zur Aktualisierung der PDU-Sitzung zum Aktivieren der Benutzerebene der PDU-Sitzung, die mit der MBS-Sitzung der Ruhe-UE verknüpft ist, von der SMF.

9. AMF nach Anspruch 8, wobei die AMF ferner dazu betreibbar ist, das Verfahren nach Anspruch 5 durchzuführen.

10. Computerlesbares Speichermedium, auf dem Anweisungen gespeichert sind, die bei Ausführung durch mindestens einen Prozessor den mindestens einen Prozessor dazu veranlassen, das Verfahren nach einem der Ansprüche 1 bis 5 durchzuführen.

11. Computerprogrammprodukt, das Anweisungen umfasst, die bei Ausführung durch mindestens einen Prozessor den mindestens einen Prozessor dazu veranlassen, das Verfahren nach einem der Ansprüche 1 bis 5 durchzuführen.

## Revendications

1. Procédé (300) réalisé par une fonction de gestion de session, SMF, comprenant :
la réception (302) d'une notification d'activation de session comprenant une identité de groupe mobile temporaire, TMGI, depuis une fonction de gestion de session de multidiffusion/diffusion, MB-SMF ;
la recherche (304) d'au moins un équipement utilisateur, UE, qui a rejoint une session de service de multidiffusion/diffusion, MBS, identifiée par la TMGI ;
l'envoi (306) d'une demande de notification de session MBS à une fonction d'accès et de mobilité, AMF, dans lequel la demande de notification de session MBS inclut une liste de l'au moins un UE, un identifiant respectif de session d'unité de données de protocole, PDU, respective associée à la session MBS de l'au moins un UE et la TMGI ;
la réception (308) d'une demande de contexte de gestion de session de mise à jour de session PDU pour la session PDU associée à la session MBS à activer depuis l'AMF ; et
l'envoi (310) d'une réponse de contexte de gestion de session de mise à jour de session PDU à l'AMF.

2. Procédé selon la revendication 1, dans lequel le plan utilisateur respectif pour la session PDU respective associée à la session MBS de l'au moins un UE n'est pas activé.

3. Procédé selon la revendication 1 ou 2, dans lequel la réponse de contexte de gestion de session de mise à jour de session PDU comprend des informations de gestion de session N2 comprenant un identifiant de session MBS et des profils de qualité de service, QoS, associés.

4. Procédé (400) réalisé par une fonction d'accès et de mobilité, AMF, comprenant :
la réception (402) d'une demande de notification de session de service de multidiffusion/diffusion, MBS, depuis une fonction de gestion de session, SMF, dans lequel la demande de notification de session MBS inclut une liste d'au moins un UE qui a rejoint une session MBS identifiée par une identité de groupe mobile temporaire, TMGI, un identifiant respectif de session d'unité de données de protocole, PDU, respective associée à la session MBS de l'au moins un UE et la TMGI ; lorsqu'un ou plusieurs UE de l'au moins un UE sont dans un état connecté de gestion de connexion, l'envoi (404) d'une réponse de notification de session MBS comprenant une liste des un ou plusieurs UE dans l'état connecté de gestion de connexion à la SMF ;
lorsqu'un ou plusieurs UE de l'au moins un UE sont dans un état inactif de gestion de connexion, l'envoi (406) d'un message de demande de radiomessagerie à un nœud de réseau d'accès radio pour la radiomessagerie des un ou plusieurs UE dans l'état inactif de gestion de connexion ;
la réception (408) d'une demande de service depuis un UE inactif des un ou plusieurs UE dans l'état inactif de gestion de connexion ;
l'envoi (410) d'une demande de contexte de gestion de session de mise à jour de session PDU pour la session PDU associée à la session MBS de l'UE inactif à activer à la SMF sur la base de l'identifiant respectif de session PDU respective associée à la session MBS de l'au moins un UE ; et
la réception (412) d'une réponse de contexte de gestion de session de mise à jour de session PDU pour l'activation du plan utilisateur de la session PDU associée à la session MBS de l'UE inactif depuis la SMF.

5. Procédé selon la revendication 4, dans lequel la réponse de contexte de gestion de session de mise à jour de session PDU comprend des informations de gestion de session N2 comprenant un identifiant de session MBS et des profils de qualité de service, QoS, associés.

6. Fonction de gestion de session, SMF (600), comprenant :
un processeur (621) ; et
une mémoire (622) couplée au processeur (621), ladite mémoire (622) contenant des instructions exécutables par ledit processeur (621), moyennant quoi ladite SMF (600) est opérationnelle pour :
recevoir une notification d'activation de session comprenant une identité de groupe mobile temporaire, TMGI, depuis une fonction de gestion de session de multidiffusion/diffusion, MB-SMF ;
rechercher au moins un équipement utilisateur, UE, qui a rejoint une session de service de multidiffusion/diffusion, MBS, identifiée par la TMGI ;
envoyer une demande de notification de session MBS à une fonction d'accès et de mobilité, AMF, dans lequel la demande de notification de session MBS inclut une liste de l'au moins un UE, un identifiant respectif de session d'unité de données de protocole, PDU, respective associée à la session MBS de l'au moins un UE et la TMGI ;
recevoir une demande de contexte de gestion de session de mise à jour de session PDU pour la session PDU associée à la session MBS à activer depuis l'AMF ; et
envoyer une réponse de contexte de gestion de session de mise à jour de session PDU à l'AMF.

7. SMF selon la revendication 6, dans laquelle la SMF est en outre opérationnelle pour réaliser le procédé selon la revendication 2 ou 3.

8. Fonction d'accès et de mobilité, AMF (600), comprenant :
un processeur (621) ; et
une mémoire (622) couplée au processeur (621), ladite mémoire (622) contenant des instructions exécutables par ledit processeur (621), moyennant quoi ladite AMF (600) est opérationnelle pour :
recevoir une demande de notification de session de service de multidiffusion/diffusion, MBS, depuis une fonction de gestion de session, SMF, dans lequel la demande de notification de session MBS inclut une liste d'au moins un UE qui a rejoint une session MBS identifiée par une identité de groupe mobile temporaire, TMGI, un identifiant respectif de session d'unité de données de protocole, PDU, respective associée à la session MBS de l'au moins un UE et la TMGI ;
lorsqu'un ou plusieurs UE de l'au moins un UE sont dans un état connecté de gestion de connexion, envoyer une réponse de notification de session MBS comprenant une liste des un ou plusieurs UE dans l'état connecté de gestion de connexion à la SMF ;
lorsqu'un ou plusieurs UE de l'au moins un UE sont dans un état inactif de gestion de connexion, envoyer un message de demande de radiomessagerie à un nœud de réseau d'accès radio pour la radiomessagerie des un ou plusieurs UE dans l'état inactif de gestion de connexion ;
recevoir (408) une demande de service depuis un UE inactif des un ou plusieurs UE dans l'état inactif de gestion de connexion ;
envoyer (410) une demande de contexte de gestion de session de mise à jour de session PDU pour la session PDU associée à la session MBS de l'UE inactif à activer à la SMF sur la base de l'identifiant respectif de session PDU respective associée à la session MBS de l'au moins un UE ; et
recevoir (412) une réponse de contexte de gestion de session de mise à jour de session PDU pour l'activation du plan utilisateur de la session PDU associée à la session MBS de l'UE inactif depuis la SMF.

9. AMF selon la revendication 8, dans laquelle l'AMF est en outre opérationnelle pour réaliser le procédé selon la revendication 5.

10. Support de stockage lisible par ordinateur stockant des instructions qui, lorsqu'elles sont exécutées par au moins un processeur, amènent l'au moins un processeur à réaliser le procédé selon l'une quelconque des revendications 1 à 5.

11. Produit de programme informatique comprenant des instructions qui, lorsqu'elles sont exécutées par au moins un processeur, amènent l'au moins un processeur à réaliser le procédé selon l'une quelconque des revendications 1 à 5.
